# FASCICULE DE BREVET EUROPEEN

(11) **EP 3 943 856 B1**
(45) Date de publication et mention de la délivrance du brevet: **16.08.2023**
(21) Numéro de dépôt: 21184637.3
(22) Date de dépôt: 09.07.2021
(51) Int. Cl.: F28B 1/06, F28D 1/02, F28D 5/00, F24F 1/06, F24F 5/00, F24F 11/36, F25B 49/00

(54) **AÉROCONDENSEUR SEC OU ADIABATIQUE COMPRENANT UN SYSTÈME DE NEUTRALISATION DE FUITES DE FLUIDE FRIGORIGÈNE**
TROCKENER ODER ADIABATISCHER LUFTKONDENSATOR, DER EIN NEUTRALISIERUNGSSYSTEM FÜR KÜHLMITTELLECKS UMFASST
DRY OR ADIABATIC EVAPORATIVE CONDENSER COMPRISING A SYSTEM FOR NEUTRALISATION OF COOLANT LEAKS

(30) Priorité: 24.07.2020 FR 2007818
(43) Date de publication de la demande: 26.01.2022
(73) Titulaire: Jacir, 77340 Pontault Combault (FR)
(72) Inventeur: DUHAMEL, Philippe, 77340 PONTAULT COMBAULT (FR)
(74) Mandataire: Casalonga

(56) Documents cités:
- EP-A2- 0 451 325
- CN-A- 104 596 149
- DE-A1- 19 635 094
- JP-A- H05 312 370
- JP-A- 2001 099 447
- US-A- 4 182 131

## Description

La présente invention concerne le domaine de la génération de froid, notamment les dispositifs de condensation.

Plus particulièrement, la présente invention concerne les circuits de frigorifiques.

Un circuit frigorifique comprend généralement successivement un compresseur, un condenseur, un détendeur et un évaporateur.

Les circuits frigorifiques permettent d'évacuer efficacement et économiquement vers un milieu extérieur une chaleur générée par un dispositif, par exemple une installation de climatisation, un réfrigérateur, ou des procédés industriels.

La présente invention trouve une application privilégiée dans les aérocondenseurs dits « adiabatiques comme divulgué par exemple par US4182131.

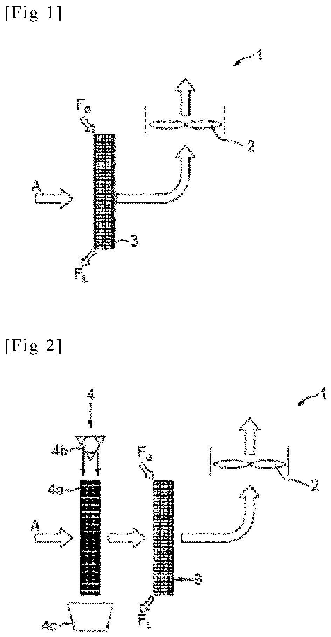

Dans de tels aérocondenseurs 1 illustrés respectivement sur les figures 1 et 2, la condensation du fluide frigorigène s'effectue par ventilation d'un flux d'air A mis en mouvement par un ou plusieurs ventilateurs 2 sur une ou plusieurs batteries d'échange thermique 3 contenant le fluide frigorigène et configurées pour faire passer le fluide frigorigène d'une forme gazeuse F_{G} à une forme liquide F_{L}. Le mouvement du fluide d'air A est représenté par des flèches.

L'aérocondenseur adiabatique, illustré sur la figure 2, se distingue de l'aérocondenseur sec, illustré sur la figure 1, par le fait qu'il comprend un dispositif 4 d'humidification de l'air en amont des batteries d'échange thermique 3. Tel qu'illustré, le dispositif 4 d'humidification de l'air comprend un média 4a, un système 4b d'arrosage par un fluide, par exemple de l'eau, disposé au-dessus dudit média 4a et configuré pour humidifier ledit média 4a et un système 4c de récupération ou de collecte de fluide d'humidification après avoir traversé le média 4a. en variante, on pourrait prévoir de pulvériser le fluide d'humidification directement dans l'air en amont des batteries d'échange thermique, en utilisant ou pas un média.

La batterie de condensation ou échangeur de chaleur comprend une pluralité de tubes et d'ailettes ou des micro-canaux. Un fluide frigorigène circule dans les tubes de la batterie de condensation. Les tubes de celle-ci sont reliés à un collecteur d'entrée du fluide frigorigène et à un collecteur de sortie du fluide frigorigène et suivant le nombre de passes entre eux par des coudes à 180°. Les connections des tubes aux collecteurs ou entre eux par l'intermédiaire de coudes à 180° s'effectuent par soudage, ce qui augmente le risque de fuite de fluide frigorigène.

Le fluide frigorigène est très souvent nocif pour l'environnement, notamment vis-à-vis de la couche d'ozone et de l'effet de serre et/ou toxique. De nos jours, le fluide frigorigène privilégié afin de réduire son impact sur l'effet de serre et la couche d'ozone est l'ammoniac (NH3). Toutefois, l'ammoniac est particulièrement toxique et inflammable.

Il existe un besoin d'éviter toute fuite de fluide frigorigène dans les aérocondenseurs dits « secs » ou « adiabatiques » vers l'environnement extérieur et, le cas échéant de maîtriser une éventuelle fuite.

La présente invention a donc pour but de palier les inconvénients ci-dessus et d'améliorer les aérocondenseurs dits « adiabatiques » afin de maîtriser les éventuelles fuites de fluide frigorigène, notamment au niveau des batteries d'échange thermique.

L'invention a pour objet un aérocondenseur selon la revendication 1 comprenant au moins un échangeur de chaleur ou batterie d'échange thermique dans lequel circule un fluide frigorigène, et au moins un capteur de détection de fuite de fluide frigorigène.

L'aérocondenseur comprend un système de neutralisation de fuites de fluide frigorigène à l'extérieur de l'échangeur de chaleur configuré pour pulvériser ou brumiser un fluide de neutralisation sur au moins un côté latéral de l'échangeur de chaleur lorsqu'une fuite de fluide frigorigène est détectée par le capteur de détection.

Le système de neutralisation permet un abattement des fuites, et ainsi la maîtrise d'éventuelles fuites de fluide frigorigène.

Avantageusement, le système de neutralisation de fuites comprend une conduite d'amenée d'un fluide de neutralisation sous haute pression, notamment de l'eau, par exemple située à l'extérieur de l'enveloppe, en amont de la batterie d'échange thermique, au moins une conduite d'alimentation connectée à la conduite d'amenée de fluide de neutralisation et s'étendant le long d'un côté latéral de l'échangeur thermique et une pluralité de buses ou disperseurs s'étendant depuis la conduite d'alimentation et configurées pour pulvériser le fluide de neutralisation en cas de détection d'une fuite de fluide frigorigène.

La conduite d'alimentation s'étend, par exemple à l'intérieur de l'enveloppe, en aval de la batterie d'échange thermique.

Selon un mode de réalisation, la conduite d'alimentation est montée sur une patte de fixation s'étendant le long d'au moins un côté latéral de l'échangeur thermique et dans lequel chaque buse est montée dans une encoche prévue dans une patte de fixation correspondante.

En variante, on pourrait prévoir de fixer les conduites d'alimentation en eau de chaque côté des batteries d'une autre manière.

Par exemple, le système de neutralisation de fuites comprend au moins deux conduites d'alimentation connectée à la conduite d'amenée de fluide de neutralisation et s'étendant le long de deux côtés latéraux, par exemple parallèles, de l'échangeur thermique.

La conduite d'amenée de fluide de neutralisation et les conduites d'alimentation forment un circuit de distribution fermé de fluide de neutralisation.

Selon l'invention, le système de neutralisation des fuites comprend un système de collecte ou récupération du fluide après pulvérisation, ledit fluide contenant le fluide frigorigène échappé de l'échangeur thermique et le fluide de neutralisation pulvérisé par les buses des conduites d'alimentation.

Par exemple, l'aérocondenseur comprend une enveloppe délimitée par des parois latérales, à savoir deux parois de côtés, une paroi avant et une paroi arrière, et un fond.

Par exemple, le système de collecte comprend au moins un conduit de récupération monté sous le plancher de l'enveloppe et comprenant une extrémité libre s'étendant dans un orifice débouchant pratiqué dans le fond de l'enveloppe.

Le fond de l'enveloppe est avantageusement plat.

Selon un autre mode de réalisation, le système de collecte comprend une pluralité de conduits de récupération et une conduite centrale reliant l'ensemble des conduits de récupération et s'entendant vers l'extérieur de l'enveloppe.

Le fluide de fuite contenu dans le fond de l'enveloppe s'écoule ainsi à travers les orifices dans les conduits de récupération, et dans la conduite principale en vue d'être récupéré et traité à l'extérieur de l'enveloppe.

La conduite principale est, par exemple, insérée dans des encoches prévues sur des traverses du plancher de l'enceinte.

Selon l'invention revendiquée, l'aérocondenseur est un aérocondenseur dit « adiabatique » comprenant un dispositif d'humidification de l'air comprenant au moins un média ou organe d'absorption monté en amont de l'échangeur thermique, un système d'arrosage d'un fluide d'humidification, par exemple de l'eau, configuré pour humidifier ledit média ou organe d'absorption et un système de récupération ou de collecte du fluide d'humidification après avoir traversé le média.

Le système de collecte d'un fluide de fuite comprend une goulotte de circulation s'étendant entre une extrémité inférieure de l'échangeur thermique et le système de récupération de fluide d'humidification provenant du média.

La goulotte peut, par exemple, être inclinée vers ledit système de récupération, de sorte à évacuer le fluide de fuite vers le système de récupération de fluide d'humidification provenant du média.

Selon un mode de réalisation, le fond de l'enveloppe comprend au moins une pente inclinée vers le système de récupération du fluide d'humidification, le fond, les parois latérales du fond comprenant au moins un orifice transversal d'évacuation débouchant dans l'enveloppe et dans le système de récupération de fluide d'humidification provenant du média, passant par exemple à travers des orifices verticaux prévus sur le support du média.

La pente du fond de l'enveloppe et les orifices transversaux jouent le rôle d'un système de collecte d'un fluide de fuite.

En variante, on pourrait prévoir qu'une seule pente pour le fond ou un nombre de pentes supérieur ou égal à deux.

La batterie d'échange thermique est, par exemple montée dans l'enveloppe.

En variante, au moins un côté latéral externe de la batterie d'échange thermique forme une paroi de côté latérale de l'enveloppe de l'aérocondenseur.

Selon un mode de réalisation, la conduite principale débouche dans le système de récupération du fluide d'humidification provenant du média.

Avantageusement, le dispositif d'humidification de l'air est activé en parallèle du système de neutralisation lorsqu'une fuite de fluide frigorigène est détectée.

Selon un mode de réalisation, l'aérocondenseur comprend au moins deux échangeurs de chaleur ou batteries d'échange thermique et le système de neutralisation de fuites potentielles de fluide frigorigène à l'extérieur des échangeurs de chaleur est configuré pour pulvériser ou brumiser un fluide de neutralisation sur chaque côté parallèle de chacun des échangeurs de chaleur lorsqu'une fuite de fluide frigorigène est détectée par le capteur de détection.

Par exemple, les deux échangeurs de chaleur sont montés parallèlement, par exemple dans l'enveloppe.

Selon un autre aspect, l'invention concerne un procédé selon la revendication 12, i.e. un procédé de neutralisation de fuites de fluide frigorigène à l'extérieur d'un échangeur de chaleur d'un aérocondenseur adiabatique, dans lequel :
- on détecte les fuites éventuelles par un capteur de détection de fluide frigorigène situé à proximité de l'échangeur de chaleur, et
- on pulvérise un fluide de neutralisation sur au moins un côté de l'échangeur de chaleur lorsqu'une fuite de fluide frigorigène est détectée par le capteur de détection.

La présente invention sera mieux comprise à l'étude de la description détaillée de modes de réalisation, pris à titre d'exemples nullement limitatifs et illustrés par les dessins annexés, sur lesquels :
[Fig 1]
[Fig 2] représentent, très schématiquement, respectivement un aérocondenseur sec et un aérocondenseur adiabatique ;
[Fig 3] est une vue en perspective d'un aérocondenseur sec ou adiabatique selon l'invention ;
[Fig 4] illustre une vue de côté d'une des batteries de l'aérocondenseur de la figure 3 selon un mode de réalisation ;
[Fig 5] est une vue de détails de la figure 3 ;
[Fig 6] est une vue en coupe partielle en perspective de l'aérocondenseur de la figure 3 ;
[Fig 7] est une vue de détails de la figure 6 ;
[Fig 8] est une vue de détails de la figure 7 ;
[Fig 9]

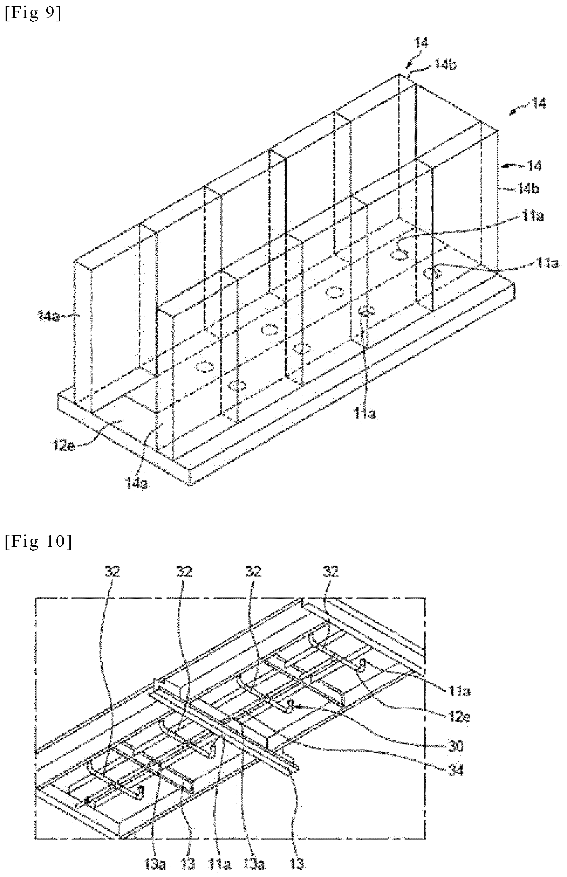

[Fig 10] représentent un aérocondenseur sec ou adiabatique selon un mode de réalisation de l'invention ; et
[Fig 11]
[Fig 12]

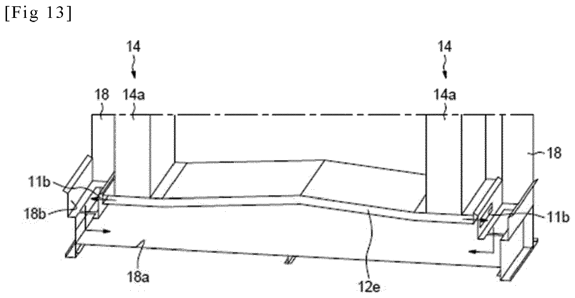

[Fig 13] représentent un aérocondenseur adiabatique selon un autre mode de réalisation de l'invention.

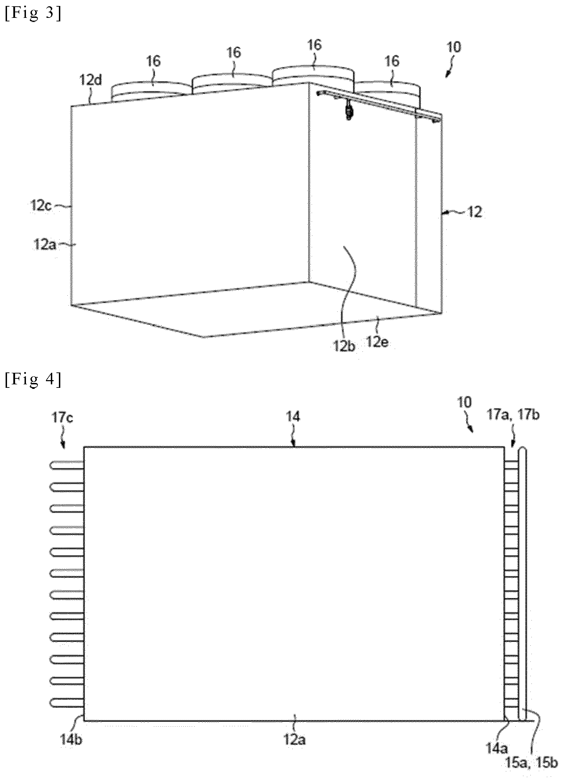

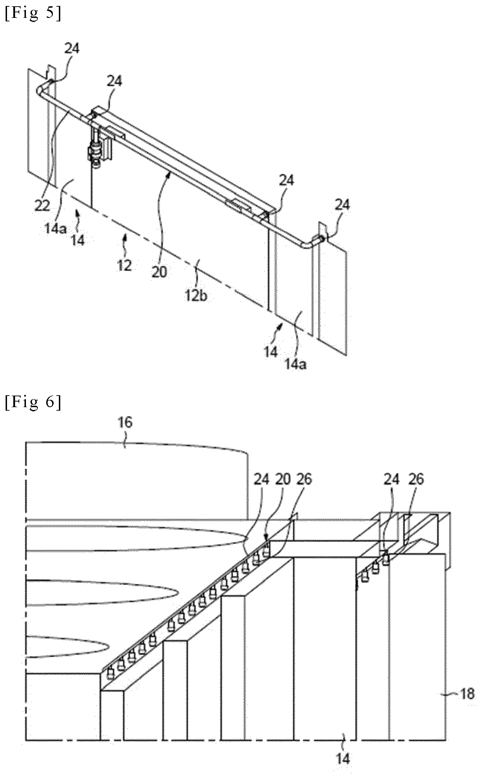

Sur les figures 3 et 5 est représenté un aérocondenseur référencé 10 dans son ensemble dans une position supposée verticale.

L'aérocondenseur 10 comprend une enveloppe 12 non étanche notamment à l'air comprenant quatre parois latérales ici verticales, à savoir deux parois de côtés 12a, une paroi avant 12b et une paroi arrière 12c. L'enveloppe 12 comprend en outre une paroi supérieure 12d et un plancher ou paroi inférieure formant un fond 12e. L'ensemble des parois 12a, 12b, 12c, 12d, 12e délimitent une enceinte interne. L'aérocondenseur 10 comprend en outre deux batteries d'échange thermique 14 ou échangeur de chaleur disposées dans l'enceinte interne de l'enveloppe 12 et comprenant chacune une pluralité de tubes 17a, 17b, 17c, visibles sur la figure 4, et d'ailettes (non représentés) ou de micro canaux. Un fluide frigorigène circule dans les tubes de chacune des batteries d'échange thermique 14.

Tel qu'illustré sur la figure 4 et de manière nullement limitative, chaque batterie d'échange thermique 14 comprend une face avant 14a et une face arrière 14b, opposée à la face avant, et deux côtés latéraux (non référencés), un côté latéral externe, du côté extérieur, et un côté latéral interne, opposé au côté latéral externe.

Chaque batterie 14 comprend un collecteur 15a d'entrée du fluide frigorigène et à un collecteur 15b de sortie du fluide frigorigène.

Tel qu'illustré, le collecteur 15a d'entrée du fluide frigorigène est relié à des premiers tubes 17a de la batterie du côté de la face avant 14a de la batterie et le collecteur 15b de sortie du fluide frigorigène est relié à des deuxièmes tubes 17b de la batterie du côté de la face avant 14a de la batterie. En variante, on pourrait prévoir que le collecteur 15b de sortie soit relié à des tubes de la batterie du côté de la face arrière 14b de la batterie.

L'aérocondenseur 10 comprend une pluralité de ventilateurs 16 montés sur la paroi supérieure 12d de l'enveloppe 12 et configurés pour aspirer de l'air extérieur et le faire passer à travers les batteries d'échange thermique 14 à travers les parois latérales.

Dans l'exemple illustré, les parois latérales 12a de l'aérocondenseur sont distinctes des batteries 14. En variante, on pourrait prévoir que le côté latéral externe d'au moins une des batteries, voir des deux batteries forment les parois latérales 12a de l'enveloppe 12.

Dans le cas où le côté latéral externe des batteries forme les parois latérales 12a de l'aérocondenseur 10, l'air extérieur aspiré par les ventilateurs 16 circule directement à travers les batteries d'échange thermique 14 à travers lesdits côtés latéraux externes.

On pourrait prévoir de disposer les batteries 14 de manière verticale ou de manière oblique pour former un V, voire de manière horizontale.

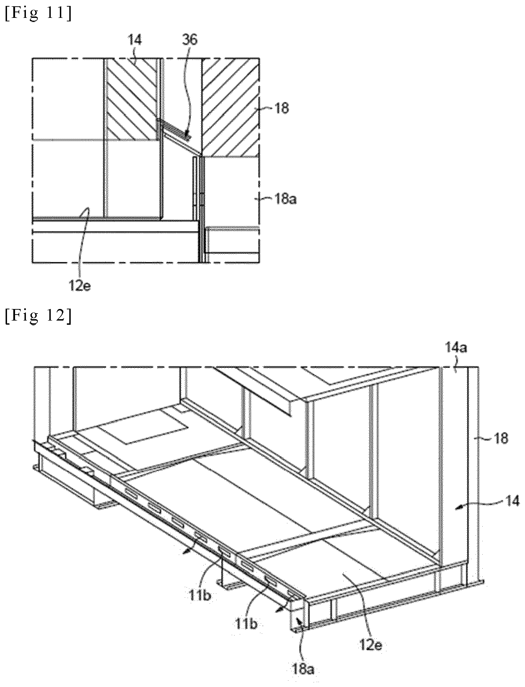

Tel qu'illustré sur la figure 6, l'aérocondenseur 10 est ici un aérocondenseur adiabatique comprenant un dispositif d'humidification de l'air comprenant deux médias ou organes d'absorption 18 configurés pour humidifier le flux d'air entrant dans les batteries 14, chacun des médias 18 est associé à une batterie 14. Chaque média 18 est disposé en amont d'une batterie 14 dans le sens de circulation du flux d'air mis en mouvement par les ventilateurs 16. Le média est généralement réalisé en matériau absorbant. Le dispositif d'humidification de l'air comprend en outre un système (non représenté) d'arrosage par un fluide d'humidification, par exemple de l'eau, disposé au-dessus de chacun des médias 18 et configuré pour humidifier ledit média 18 correspondant et un système 18a de récupération ou de collecte du fluide d'humidification après avoir traversé le média 18. Le système 18a de récupération du fluide d'humidification est visible sur la figure 11.

En variante, on pourrait prévoir qu'une seule batterie d'échange thermique et un média d'humidification associé. On pourrait également prévoir un nombre de batteries d'échange thermique supérieur à trois.

Dans le cas où les côtés latéraux des batteries 14 forment les parois latérales 12a de l'enveloppe 12, le dispositif d'humidification de l'air est disposé à l'extérieur de l'enveloppe 12.

L'aérocondenseur 10 comprend un système 20 de neutralisation de fuites potentielles de fluide frigorigène circulant dans les batteries d'échange thermique 14.

Le système 20 de neutralisation de fuites potentielles de fluide frigorigène comprend une conduite 22 d'amenée d'un fluide sous haute pression, notamment de l'eau, située à l'extérieur de l'enveloppe 12 et une pluralité de conduites 24 d'alimentation chacune connectées à la conduite d'amenée de fluide de neutralisation et s'étendant le long de chaque côté latéral des batteries 14. Tel qu'illustré, et de manière non limitative, les conduites 24 d'alimentation s'étendent à l'intérieur de l'enceinte 12.

La conduite 22 d'amenée de fluide de neutralisation et les conduites d'alimentation 24 forment un circuit de distribution fermé de fluide de neutralisation.

Chaque conduite 24 d'alimentation est fixée sur un côté latéral d'une batterie 14. Ainsi, les deux côtés latéraux de chacune des batteries 14 sont entourés par une conduite 24 d'alimentation.

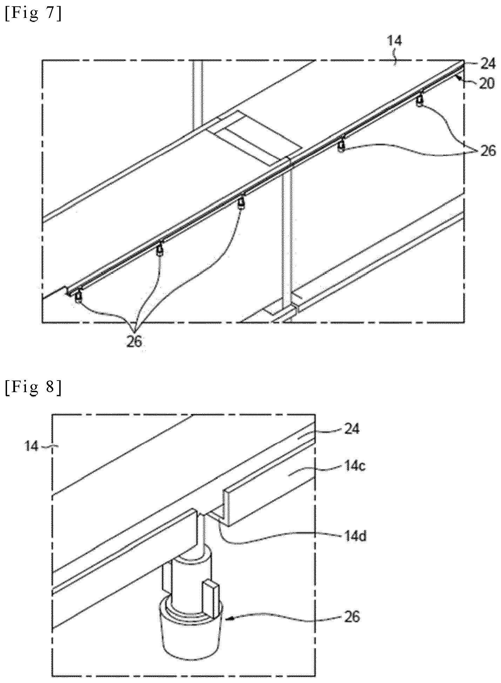

Tel qu'illustré en détails sur les figures 7 et 8, chaque conduite 24 d'alimentation est montée sur une patte de fixation 14c s'étendant le long de chaque côté latéral des batteries 14.

Chaque conduite 24 d'alimentation comprend une pluralité de buses ou disperseurs 26 s'étendant selon une direction sensiblement perpendiculaire à la conduite 24 d'alimentation. Chaque buse 26 s'étendant dans une encoche 14d correspondante prévue dans les pattes de fixation 14c des batteries 14.

En variante, on pourrait prévoir de fixer les conduites 24 d'alimentation en eau de chaque côté latéral des batteries 14 d'une autre manière.

Dans le cas où les parois latérales des batteries forment les parois latérales de l'enceinte 12, deux conduites 24 d'alimentation du fluide de neutralisation sont disposées à l'extérieur de l'enceinte 12.

On pourrait également prévoir un nombre de conduite d'alimentation par côté latéral de chaque batterie 14 supérieur à un, par exemple, supérieur ou égal à deux.

L'aérocondenseur 10 comprend un organe de détection ou capteur (non représenté), monté dans l'enceinte 12 et configuré pour détecter une fuite du fluide frigorigène.

Lorsqu'une fuite du fluide frigorigène est détectée, le système 20 de neutralisation de fuites est activé automatiquement, de sorte à pulvériser ou brumiser le fluide de neutralisation, par exemple de l'eau ou un fluide neutre sous haute pression de chaque côté des batteries 14 et ainsi permettre de rabattre le fluide frigorigène s'échappant des batteries vers le fond 12e de l'enceinte 12.

En effet, en cas de choc sur les batteries d'échange thermique, ou de perçage des tubes formant lesdites batteries, il y a un risque de fuite du fluide frigorigène qui ne doit en aucun cas s'échapper dans l'environnement.

Le système 20 de neutralisation permet un abattement des fuites vers le fond de l'enceinte 12, et ainsi la maîtrise d'éventuelles fuites de fluide frigorigène.

Dans le cas d'un aérocondenseur dit « adiabatique », le système d'humidification de l'air est activé en parallèle afin de pulvériser le fluide d'humidification sur le média 18.

Tel qu'illustré sur les figures 9 à 13, le système 20 de neutralisation des fuites comprend un système 30 de collecte ou récupération du fluide de fuite contenant le fluide frigorigène échappé des batteries 14 et le fluide de neutralisation.

Dans le mode de réalisation illustré sur les figures 9 et 10, le système 30 de collecte comprend une pluralité de conduits 32 de récupération montée sous le plancher de l'enceinte 12 et comprenant chacun une extrémité libre s'étendant dans un orifice 11a débouchant pratiqué dans le fond 12e de l'enceinte 12. Une conduite centrale 34 relie l'ensemble des conduits 32 de récupération et s'entend vers l'extérieur de l'enceinte 12.

Le fluide de fuite contenu dans le fond 12e de l'enceinte 12 s'écoule ainsi à travers les orifices 11a dans les conduits 32 de récupération, et dans la conduite principale 34 en vue d'être récupéré et traité à l'extérieur de l'enceinte 12. Par exemple, la conduite principale 34 peut déboucher dans le système 18a de récupération du fluide d'humidification provenant du média 18 dans le cas d'un aérocondenseur dit « adiabatique ».

Tel qu'illustré, le fond 12e est sensiblement plat.

Chaque conduit 32 de récupération est relié à un orifice 11a par un coude à 90° et une bonde (non référencée), par exemple vissée par le fond 12e du plancher.

La conduite principale 34 est insérée dans des encoches 13a prévues sur des traverses 13 du plancher de l'enceinte 12.

Le mode de réalisation illustré sur les figures 11 à 13 diffère du mode de réalisation illustré sur les figures 9 et 10 par le fait que le fond 12e de l'enceinte 12 est incliné en deux pentes depuis le centre dudit fond 12e vers l'extérieur, de sorte à faire s'écouler le fluide de fuite vers l'extérieur, notamment dans le système 18a de récupération de fluide d'humidification provenant du média 18. Tel qu'illustré, l'extrémité inférieure des batteries 14 est surélevée par rapport au fond 12e de l'enceinte 12.

Les parois latérales du fond 12e comprend des orifices transversaux 11b d'évacuation débouchant dans l'enceinte 12 et dans le système ou bac 18a de récupération de fluide d'humidification provenant du média 18, passant à travers des orifices verticaux (non référencés) prévus sur le support 18b du média 18.

En variante, on pourrait prévoir qu'une seule pente pour le fond 12e ou un nombre de pentes supérieur à trois.

Tel qu'illustré sur la figure 11, le système 30 de collecte comprend une goulotte 36 de circulation s'étendant entre l'extrémité inférieure de chacune des batteries 14 et le système 18a de récupération de fluide d'humidification provenant du média 18. La goulotte 36 est ici inclinée vers ledit système 18a de récupération, de sorte à évacuer le fluide de fuite vers le système 18a de récupération de fluide d'humidification provenant du média 18.

Ce mode de réalisation s'applique à un aérocondenseur dit « adiabatique ».

Le flux d'écoulement du fluide de fuite contenant le fluide frigorigène échappé des batteries 14 est représenté par des flèches visibles sur les figures 12 et 13.

Grâce à l'invention, il est possible de neutraliser les éventuelles fuites de fluide frigorigène circulant dans les tubes des batteries d'échange thermique présents à l'intérieur de l'enceinte 12 d'un aérocondenseur adiabatique en pulvérisant automatiquement un fluide de neutralisation dès qu'une fuite est détectée et en récupérant le fluide de fuite.

## Revendications

1. Aérocondenseur (10) comprenant au moins un échangeur de chaleur (14) dans lequel circule un fluide frigorigène, et au moins un capteur de détection de fuite de fluide frigorigène, l'aérocondenseur étant un aérocondenseur adiabatique comprenant un dispositif d'humidification de l'air comprenant au moins un média (18) monté en amont de l'échangeur thermique (14), un système d'arrosage d'un fluide d'humidification configuré pour humidifier ledit média (18) et un système (18a) de récupération du fluide d'humidification après avoir traversé le média (18), **caractérisé en ce qu'**il comprend un système (20) de neutralisation de fuites de fluide frigorigène à l'extérieur de l'échangeur de chaleur (14) configuré pour pulvériser un fluide de neutralisation sur au moins un côté latéral de l'échangeur de chaleur (14) lorsqu'une fuite de fluide frigorigène est détectée par le capteur de détection, le système (20) de neutralisation des fuites comprenant un système (30) de collecte d'un fluide de fuite après pulvérisation, ledit fluide de fuite contenant le fluide frigorigène échappé de l'échangeur thermique (14) et le fluide de neutralisation pulvérisé par les buses (26) des conduites (24) d'alimentation, et **en ce que** le système (30) de collecte d'un fluide de fuite comprend une goulotte (36) de circulation s'étendant entre une extrémité inférieure de l'échangeur thermique (14) et le système (18a) de récupération de fluide d'humidification provenant du média (18).

2. Aérocondenseur selon la revendication 1, dans lequel le système (20) de neutralisation de fuites comprend une conduite (22) d'amenée d'un fluide de neutralisation sous haute pression située à l'extérieur de l'enveloppe (12), au moins une conduite (24) d'alimentation connectée à la conduite (22) d'amenée de fluide de neutralisation et s'étendant le long d'un côté latéral de l'échangeur thermique (14) et une pluralité de buses (26) s'étendant depuis la conduite (24) d'alimentation et configurées pour pulvériser le fluide de neutralisation en cas de détection d'une fuite de fluide frigorigène.

3. Aérocondenseur selon la revendication 2, dans lequel la conduite (24) d'alimentation est montée sur une patte de fixation (14c) s'étendant le long d'au moins un côté de l'échangeur thermique (14) et dans lequel chaque buse (26) est montée dans une encoche (14d) prévue dans une patte de fixation (14c) correspondante.

4. Aérocondenseur selon la revendication 2 ou 3, dans lequel le système (20) de neutralisation de fuites comprend au moins deux conduites (24) d'alimentation connectée à la conduite (22) d'amenée de fluide de neutralisation et s'étendant le long de deux côtés latéraux parallèles de l'échangeur thermique (14).

5. Aérocondenseur selon l'une quelconque des revendications précédentes, comprenant une enveloppe (12) délimitée par des parois latérales (12a, 12b, 12c) et un fond (12e), et dans lequel le système (30) de collecte comprend au moins un conduit (32) de récupération monté sous le plancher de l'enveloppe (12) et comprenant une extrémité libre s'étendant dans un orifice (11a) débouchant pratiqué dans le fond (12e) de l'enveloppe (12).

6. Aérocondenseur selon l'une quelconque des revendications précédentes, dans lequel, le fond (12e) est plat.

7. Aérocondenseur selon l'une quelconque des revendications précédentes, dans lequel le système (30) de collecte comprend une pluralité de conduits (32) de récupération et une conduite centrale (34) reliant l'ensemble des conduits (32) de récupération et s'entendant vers l'extérieur de l'enveloppe (12).

8. Aérocondenseur selon l'une quelconque des revendications précédentes, comprenant une enveloppe (12) délimitée par des parois latérales (12a, 12b, 12c) et un fond (12e), et dans lequel le fond (12e) de l'enveloppe (12) comprend au moins une pente inclinée vers le système (18a) de récupération du fluide d'humidification, le fond (12e), les parois latérales du fond (12e) comprenant au moins un orifice transversal (11b) d'évacuation débouchant dans l'enveloppe (12) et dans le système (18a) de récupération de fluide d'humidification provenant du média (18).

9. Aérocondenseur selon la revendication 7, dans lequel la conduite principale (34) débouche dans le système (18a) de récupération du fluide d'humidification provenant du média (18).

10. Aérocondenseur selon l'une quelconque des revendications précédentes, dans lequel le dispositif d'humidification de l'air est activé en parallèle du système de neutralisation (20) lorsqu'une fuite de fluide frigorigène est détectée.

11. Aérocondenseur selon l'une quelconque des revendications précédentes, comprenant au moins deux échangeurs de chaleur (14), le système (20) de neutralisation de fuites potentielles de fluide frigorigène à l'extérieur des échangeurs de chaleur étant configuré pour pulvériser un fluide de neutralisation sur chaque côté latéral de chacun des échangeurs de chaleur lorsqu'une fuite de fluide frigorigène est détectée par le capteur de détection.

12. Procédé de neutralisation de fuites de fluide frigorigène à l'extérieur d'un échangeur de chaleur (14) d'un aérocondenseur (10) adiabatique selon la revendication 1, dans lequel :
- on détecte par un capteur de détection de fluide frigorigène situé à proximité de l'échangeur de chaleur (14), et
- on pulvérise un fluide de neutralisation sur au moins un côté de l'échangeur de chaleur (14) lorsqu'une fuite de fluide frigorigène est détectée par le capteur de détection.

## Patentansprüche

1. Luftkondensator (10), umfassend mindestens einen Wärmetauscher (14), in dem ein Kühlmittel zirkuliert, und mindestens einen Sensor zum Erkennen eines Kühlmittellecks wobei der Luftkondensator ein adiabatischer Luftkondensator, der eine Befeuchtungsvorrichtung der Luft umfasst, die mindestens ein Medium (18) umfasst, das stromaufwärts des Wärmetauschers (14) gelegen montiert ist, ein Berieselungssystem für ein Befeuchtungsmittel, das konfiguriert ist, um das Medium (18) zu befeuchten, und ein System (18a) zum Auffangen des Befeuchtungsmittels, nachdem es das Medium (18) durchquert hat, **dadurch gekennzeichnet, dass** er ein System (20) zum Neutralisieren von Kühlmittellecks außerhalb des Wärmetauschers (14) umfasst, das konfiguriert ist, um ein Neutralisierungsmittel auf mindestens einer lateralen Seite des Wärmetauschers (14) zu zerstäuben, wenn durch den Sensor zum Erkennen ein Kühlmittelleck erkannt wird, wobei das System (20) zum Neutralisieren der Lecks ein System (30) zum Sammeln eines Leckage-Fluids nach dem Zerstäuben umfasst, wobei das Leckage-Fluid das aus dem Wärmetauscher (14) ausgelaufene Kühlmittel, und das von den Düsen (26) der Versorgungsleitungen (24) zerstäubte Neutralisierungsmittel enthält, und dadurch, dass das System (30) zum Sammeln eines Leckage-Fluids eine Zirkulationsrinne (36) umfasst, die sich zwischen einem unteren Ende des Wärmetauschers (14) und dem System (18a) zum Auffangen des Befeuchtungsmittels, das aus dem Medium (18) herstammt, erstreckt.

2. Luftkondensator nach Anspruch 1, wobei das System (20) zum Neutralisieren von Lecks eine Zuführungsleitung (22) für ein Neutralisierungsmittel unter Hochdruck umfasst, die sich außerhalb des Gehäuses (12) befindet, mindestens eine Versorgungsleitung (24), die mit der Zuführungsleitung (22) für ein Neutralisierungsmittel verbunden ist, und sich entlang einer lateralen Seite des Wärmetauschers (14) erstreckt, und eine Vielzahl von Düsen (26), die sich aus der Versorgungsleitung (24) erstrecken, und konfiguriert sind, um das Neutralisierungsmittel im Falle einer Erkennung eines Kühlmittellecks zu zerstäuben.

3. Luftkondensator nach Anspruch 2, wobei die Versorgungsleitung (24) auf einer Befestigungslasche (14c) montiert ist, die sich entlang mindestens einer Seite des Wärmetauschers (14) erstreckt, und wobei jede Düse (26) in einer Kerbe (14d) montiert ist, die in einer entsprechenden Befestigungslasche (14c) vorgesehen ist.

4. Luftkondensator nach Anspruch 2 oder 3, wobei das System (20) zum Neutralisieren von Lecks mindestens zwei Versorgungsleitungen (24) umfasst, die mit der Zuführungsleitung (22) für ein Neutralisierungsmittel verbunden sind, und sich entlang zweier paralleler lateraler Seiten des Wärmetauschers (14) erstrecken.

5. Luftkondensator nach einem der vorstehenden Ansprüche, umfassend ein Gehäuse (12), das durch Seitenwände (12a, 12b, 12c) und einen Boden (12e) begrenzt ist, und wobei das System (30) zum Sammeln mindestens eine Rohrleitung (32) zum Auffangen umfasst, die unter der Bodenplatte des Gehäuses (12) montiert ist, und ein freies Ende umfasst, das sich in einer einmündenden Öffnung (11a) erstreckt, die in den Boden (12e) des Gehäuses (12) eingearbeitet ist.

6. Luftkondensator nach einem der vorstehenden Ansprüche, wobei der Boden (12e) eben ist.

7. Luftkondensator nach einem der vorstehenden Ansprüche, wobei das System (30) zum Sammeln eine Vielzahl von Rohrleitungen (32) zum Auffangen, und eine zentrale Leitung (34) umfasst, die die Gesamtheit der Rohrleitungen (32) zum Auffangen verbindet, und sich nach außerhalb des Gehäuses (12) erstreckt.

8. Luftkondensator nach einem der vorstehenden Ansprüche, umfassend ein Gehäuse (12), das durch Seitenwände (12a, 12b, 12c) und einen Boden (12e) begrenzt ist, und wobei der Boden (12e) des Gehäuses (12) mindestens eine leichte Neigung zum System (18a) zum Auffangen des Befeuchtungsmittels hin umfasst, wobei der Boden (12e), die Seitenwände des Bodens (12e) mindestens eine quer verlaufende Ausbringungsöffnung (11b) umfassen, die in das Gehäuse (12) und in das System (18a) zum Auffangen des Befeuchtungsmittels, das von dem Medium (18) herstammt, mündet.

9. Luftkondensator nach Anspruch 7, wobei die Hauptleitung (34) in das System (18a) zum Auffangen des Befeuchtungsmittels, das von dem Medium (18) herstammt, mündet.

10. Luftkondensator nach einem der vorstehenden Ansprüche, wobei die Befeuchtungsvorrichtung der Luft parallel zum System (20) zum Neutralisieren aktiviert wird, wenn ein Kühlmittelleck erkannt wird.

11. Luftkondensator nach einem der vorstehenden Ansprüche, umfassend mindestens zwei Wärmetauscher (14), wobei das System (20) zum Neutralisieren möglicher Kühlmittellecks außerhalb der Wärmetauscher konfiguriert ist, um ein Neutralisierungsmittel auf jeder lateralen Seite eines jeden der Wärmetauscher zu zerstäuben, wenn durch den Sensor zum Erkennen ein Kühlmittelleck erkannt wird.

12. Verfahren zum Neutralisieren von Kühlmittellecks außerhalb eines Wärmetauschers (14) eines adiabatischen Luftkondensators (10) nach Anspruch 1, wobei:
- durch einen Sensor zum Erkennen Kühlmittel, das sich in der Nähe des Wärmetauschers (14) befindet, erkannt wird,
- ein Neutralisierungsmittel auf mindestens einer Seite des Wärmetauschers (14) zerstäubt wird, wenn durch den Sensor zum Erkennen ein Kühlmittelleck erkannt wird.

## Claims

1. An evaporative condenser (10) comprising at least one heat exchanger (14) in which a coolant circulates, and at least one coolant leak detection sensor, the evaporative condenser being an adiabatic evaporative condenser comprising an air humidification device comprising at least one medium (18) mounted upstream of the heat exchanger (14), a humidification fluid sprinkling system configured to humidify said medium (18) and a system (18a) for recovering the humidification fluid after having passed through the medium (18), **characterised in that** it comprises a system (20) for neutralising coolant leaks outside the heat exchanger (14) configured to spray a neutralising fluid on at least one lateral side of the heat exchanger (14) when a coolant leak is detected by the detection sensor, the leak neutralisation system (20) comprising a system (30) for collecting a leaking fluid after spraying, said leaking fluid containing the coolant escaped from the heat exchanger (14) and the neutralising fluid sprayed by the nozzles (26) of the supply ducts (24), and **in that** the system (30) for collecting a leaking fluid comprises a circulation chute (36) extending between a lower end of the heat exchanger (14) and the system (18a) for recovering the humidification fluid originating from the medium (18).

2. The evaporative condenser according to claim 1, wherein the leak neutralisation system (20) comprises a duct (22) for feeding a neutralising fluid under high pressure located outside the enclosure (12), at least one supply duct (24) connected to the neutralising fluid feed-in duct (22) and extending along a lateral side of the heat exchanger (14) and a plurality of nozzles (26) extending from the supply duct (24) and configured to spray the neutralising fluid in case of detection of a coolant leak.

3. The evaporative condenser according to claim 2, wherein the supply duct (24) is mounted on a fastening bracket (14c) extending along at least one side of the heat exchanger (14) and wherein each nozzle (26) is mounted in a notch (14d) provided in a corresponding fastening bracket (14c).

4. The evaporative condenser according to claim 2 or 3, wherein the leak neutralisation system (20) comprises at least two supply ducts (24) connected to the neutralising fluid feed-in duct (22) and extending along two parallel lateral sides of the heat exchanger (14).

5. The evaporative condenser according to any one of the preceding claims, comprising an enclosure (12) delimited by lateral walls (12a, 12b, 12c) and a bottom (12e), and wherein the collection system (30) comprises at least one recovery duct (32) mounted under the floor of the enclosure (12) and comprising a free end extending into an open-through orifice (11a) formed in the bottom (12e) of the enclosure (12).

6. The evaporative condenser according to any one of the preceding claims, wherein the bottom (12e) is flat.

7. The evaporative condenser according to any one of the preceding claims, wherein the collection system (30) comprises a plurality of recovery ducts (32) and a central duct (34) connecting all recovery ducts (32) and extending towards the outside of the enclosure (12).

8. The evaporative condenser according to any one of the preceding claims, comprising an enclosure (12) delimited by lateral walls (12a, 12b, 12c) and a bottom (12e), and wherein the bottom (12e) of the enclosure (12) comprises at least one slope inclined towards the system (18a) for recovering the humidification fluid, the bottom (12e), the lateral walls of the bottom (12e) comprising at least one transverse discharge orifice (11b) opening into the enclosure (12) and into the system (18a) for recovering humidification fluid originating from the medium (18).

9. The evaporative condenser according to claim 7, wherein the main duct (34) opens into the system (18a) for recovering the humidification fluid originating from the medium (18).

10. The evaporative condenser according to any one of the preceding claims, wherein the air humidification device is activated in parallel with the neutralisation system (20) when a coolant leak is detected.

11. The evaporative condenser according to any one of the preceding claims, comprising at least two heat exchangers (14), the system (20) for neutralising potential coolant leaks outside the heat exchangers being configured to spray a neutralising fluid on each lateral side of each one of the heat exchangers when a coolant leak is detected by the detection sensor.

12. A method for neutralising coolant leaks outside a heat exchanger (14) of an adiabatic evaporative condenser (10) according to claim 1, wherein:
- detection is done by a coolant detection sensor located proximate to the heat exchanger (14), and
- a neutralising fluid is sprayed on at least one side of the heat exchanger (14) when a coolant leak is detected by the detection sensor.
